# EUROPEAN PATENT SPECIFICATION

(11) **EP 1 752 275 B1**
(45) Date of publication and mention of the grant of the patent: **03.06.2009**
(21) Application number: 06076551.8
(22) Date of filing: 09.08.2006
(51) Int. Cl.: B29C 51/26, B29C 33/30, F16B 21/04, B29C 51/42, B29C 35/16

(54) **Assembly of an exchangeable mould part and fixing device**
Zusammenbau eines auswechselbaren Formteils und einer Fixiervorrichtung
Assemblage d'un élément de moule interchangeable et un élément de fixation

(30) Priority: 09.08.2005 NL 1029703
(43) Date of publication of application: 14.02.2007
(73) Proprietor: Anbeco B.V., 5161 EG Sprang-Capelle (NL)
(72) Inventor: Van Veen, Gerardus Judocus Cornelius Maria, 5171 GG Kaatsheuvel (NL)
(74) Representative: de Baat, Michiel Anton

(56) References cited:
- US-A- 4 500 277
- US-B1- 6 688 873

## Description

The invention relates to an assembly of an exchangeable mould part and fixing device for fixing the mould part in a mould of a thermoforming machine. The fixing device comprises an engaging element for engaging the mould part, wherein the assembly has a first mode or position, in which the mould part is in engagement with the engaging element and is preferably suitable for (co-)defining the form of a product to be produced with the thermoforming machine, and a second position in which the mould part can be disengaged from the engaging element. The assembly further comprises a fixing mechanism operative between the engaging element and the mould part for fixing the mould part relative to the engaging element.

A thermoforming machine is used to form flat sheets or foil into three-dimensional shapes, such as tubs and cups. The lower mould is provided with cavities, wherein the form of the cavity defines the shape of the product to be produced. The upper mould and the plug assist also define the shape. The cavity can be constructed from a form part for the side wall and a form part for the bottom of the product. Other combinations of wall parts are also possible. A plug assist is movable in the cavity. Other form parts can also be present in the cavity. In one embodiment the bottom is accommodated displaceably in the cavity by means of an ejector in order to knock the formed and cooled product out of the mould after forming thereof. According to the invention a mould part defines the form of the product when this mould part is involved in the production around, close to or in the cavity.

For the production of differently shaped products it is possible to replace the form part of the bottom or the side wall. It is hereby possible for instance to make tubs with a volume of 500 ml or 250 ml.

NL 1018389 C describes an assembly according to the preamble of claim 1. The engaging element is formed by two rods. Attached to the rods is a support block in which a clamping device is arranged. Using the clamping device the form part is clamped fixedly against the support block. For removal of the form part the assembly must be displaced transversely of the main plane of the lower mould until the form part moves out of the cavity. The clamping action of the clamping device is discontinued, whereafter the form part can be removed from the engaging element by lateral displacement relative thereto.

Known from US 6,688,873 is a thermoforming apparatus wherein a plurality of plug assists are arranged on a base plate. The plug assists can be placed on bosses projecting from the base plate. By placing the plug assist on the boss and rotating thereof a pin protruding laterally from the boss can be received in a guide slot of the plug assist. The pin can be fixed by being enclosed in the slot and dowels protruding into the slot. Fixation of the plug assist is not stable and thus not precise enough for thermoforming. Precise fixation is particularly critical for the positioning of the lower mould.

Other fixing mechanisms are shown in US 4 500 277 and US 6 688 873 B1.

The object of the present invention is to provide a new concept for an assembly of an exchangeable mould part and a fixing device. It is a particular object to improve fixing of the form part or mould part in a manner such that rapid interchangeability is combined with high precision.

This is according to the present invention reached by an assembly according to claim and its use according to claim 18.

According to a first aspect of the invention the assembly is adapted for this purpose to disengage the mould part from the engaging element in the second position by a relative rotation movement between mould part and engaging element, wherein the fixing mechanism comprises a feed channel and a chamber for a medium, wherein the chamber is arranged between engaging element and mould part. The medium which can be fed into the feed channel and into the chamber is also used for fixation of the mould part relative to the engaging element. A chamber between the two parts can be filled with the medium, and the presence of the medium prevents movement of the two parts relative to each other.

According to the first aspect, the fixing mechanism is able to bring the two parts into the second position, wherein the intermediate space can be filled, whereby the two parts are positioned and fixed relative to each other. The combination of a fixing mechanism and the use of a medium for fixation is not known in the prior art.

In a preferred embodiment the feed channel is arranged in the engaging means. The feed channel runs through the engaging means. The engaging means is preferably partially received in the mould part. The internal chamber is hereby accessed via the feed channel.

In an embodiment the fixing mechanism is adapted to fix the mould part relative to the engaging element in a direction transversely of a main plane of the mould. Fixation is hereby obtained in the direction in which the greatest forces are exerted. It is precisely the fixation which prevents the occurrence of play. Because the chamber can be filled with a non-compressible medium, the mutual play, also in the direction of the greatest forces, can be minimized and a more precise fixation is obtained.

According to a second aspect of the invention, the assembly is movable between the first and second position, and the assembly is then situated in respectively a first and second position. According to the invention the assembly is adapted to disengage the mould part from the engaging element in the second mode/position by a relative rotation movement between mould part and engaging element. The rotation movement of the mould part can take place while the mould part is still situated in the cavity. The assembly according to the invention is preferably movable in an axial direction between the first and second position. The assembly and preferably the engaging elements only have to be displaced axially through a preferably small distance. This short distance is already present in the machine for the purpose of ejecting the product out of the mould when the product is finished. According to an embodiment, the space available in the cavity is used on the one hand for ejecting products out of the mould and on the other for the interchangeability. Changeover of a mould to another product is therefore possible in simple and rapid manner.

From the working position, the first position, the assembly moves axially to a second position. In this second position the engagement can be broken by a rotation movement. In one embodiment the complete assembly moves axially from the first position to the second position. In another embodiment there is a relative axial movement between engaging means and mould part.

Diverse mould parts can be fixed by means of the rapid-action coupling according to the invention. The mould part can be a lower mould part, an upper mould part, a plug assist or other part movable in the cavity. The mould part preferably forms part of the lower mould and the mould part is movable in the cavity together with the engaging means coupled to the thermoforming apparatus.

The assembly is preferably further adapted to disengage the mould part from the engaging means by a relative axial movement between mould part and engaging means following the relative rotation movement. An axial movement takes place from the working position to the second position. From the second position a relative rotation movement takes place. The parts are then moved away from each other by a substantially axial movement, preferably a movement in opposite direction to the first axial movement. In an embodiment this movement corresponds to the movement of for instance an ejecting movement of products formed in the cavity.

The fixing mechanism is preferably adapted to fix the mould part relative to the engaging element at least in a direction transversely of a main plane of the lower mould. This is because during production of the product forces occur transversely of the main plane of the lower mould which would cause the mould part to displace in the cavity. The fixing mechanism must be of a nature such as to ensure that this cannot occur. This is a considerable improvement in respect of US 6,688,873. US 6,688,873 describes a guiding parallel to the main plane. The fixing is particularly intended to block this guiding, and so for fixing in a direction parallel to the main plane of the lower mould. Despite the use of the guiding, this same guiding nevertheless still allows considerable movements which affect the quality of the products. With the invention this is prevented, precisely because the fixing is oriented transversely of the main plane.

In a preferred embodiment the axial movement from the first to the second position is a movement transversely of the main plane. Despite the fact that the possible movement of the mould part in the direction transversely of the main plane is hereby increased, this possible movement will in fact be prevented by a suitable fixation and a considerable improvement achieved compared to for instance US 6,688,873.

The fixing mechanism comprises means for fixing the assembly in the first position against the axial movement to the second position. The skilled person will be familiar with different possible embodiments of the fixation. In an embodiment the engaging means and the mould part are connected to each other by means of a releasable screw connection. The fixing mechanism can also comprise means outside the assembly, i.e. in the connection of the assembly to the thermoforming apparatus. A fixing mechanism can fix the engaging means in the first position, and thereby also the mould part which is directly connected to the engaging means.

In a embodiment according to the second aspect of the invention, the fixing mechanism comprises a feed channel for a medium, preferably the cooling medium. The medium also serves as fixing means. The fixing mechanism can be hydraulic. A pumping means can be present. The medium is preferably supplied by means of a pumping means.

The feed channel is connected to a chamber for the medium formed between engaging means and mould part. The chamber is fillable. In the fixed situation the chamber is filled with the medium. Fixation in the first position is obtained by filling the chamber. Fixation can be broken by discharging the medium, preferably via a discharge channel. Through discharge of the medium the fixation can be broken and it is possible to switch from the first position to the second.

The assembly according to the invention preferably has a chamber with a volume which can be changed, preferably by a movement of the mould part relative to the engaging means. The volume is increased by supplying medium. By enclosing the medium in the chamber the chamber will retain this volume. Use is preferably made of a medium which is not compressible, or hardly so. A fixed volume of the chamber is obtained by supplying medium, and a fixing is provided in this manner.

The volume of the chamber is preferably variable by an axial movement of mould part relative to engaging means. This is preferably the relative movement between the first and second position. A fixing is obtained by filling the chamber in the first position.

A resilient element such as a spring or a rubber seal or the like is preferably arranged in the assembly between engaging means and mould part, wherein the resilient element biases the axial movement of the engaging means relative to the mould part, in particular the relative axial movement between first and second positions. In this manner the fixing mechanism comprises a resilient element.

In a preferred embodiment the resilient element biases the engaging means relative to the mould part in a direction opposed to the direction of displacement from the first position to the second. A determined degree of fixing is hereby retained, even if the fixing by the medium is not available. In addition, the biasing and the pressure of the medium are combined during fixing, and this results in better fixing.

In order to improve the desired fixation, a bayonet-type fixing mechanism can be applied in a particularly advantageous embodiment.

According to a further embodiment, there is further provided a locking mechanism for locking rotation of the mould part relative to the engaging element. The locking mechanism prevents the fixing mechanism being rendered inoperative during use of the thermoforming machine.

In a particularly advantageous embodiment according to the invention there is attached to the mould part an extension piece which is provided with an opening for passage of an end portion of the engaging element. The mould part can be attached to the extension piece in diverse ways, for instance by means of bolts, screw thread, welding, soldering, glueing etc.. The fixing mechanism is situated between the mould part with extension piece on the one hand and the engaging element on the other. For replacement of the mould part the unit of mould part and extension piece must be removed from the engaging element. The extension piece can form a wall of the chamber for a medium formed between mould part and engaging means.

Serving as a bayonet-type fixing mechanism are at least one recess arranged on the extension piece and at least one protrusion on the engaging element co-acting with the recess, or vice versa. The protrusion can be placed through the recess and, through rotation between the engaging element and the mould part, will bring about a coupling between the two elements. In order to hold the engaging element and the mould part in the coupled position, a compression spring is preferably arranged between the two elements.

The engaging element preferably further comprises channels for feed and discharge of a cooling medium to the mould part. Heat must be discharged from the mould during the process in order to cool the product and keep it in its final form.

The channels preferably debouch in a cooling space of which the mould part forms a wall. The pressure of the cooling medium on the mould part and the spring force together represent the force which would have to be overcome in order to move the mould part, preferably the bottom, relative to the mould during production. Various dimensions are however such that the sum of the pressure of the cooling medium and the spring force is greater than the forces occurring on the mould part during production, so that this movement of the bottom does not take place.

For exchanging of the mould part no pressure will be exerted on the mould part by the cooling medium and only the spring force has to be overcome in order to release the fixing mechanism.

In a particularly advantageous embodiment the engaging element comprises a rod extending transversely of the main plane of the lower mould. It is advantageous to provide the mould part with an opening having an elongate cavity in which an end portion of the engaging element, in particular a part of the rod, can be accommodated. A guiding is hereby obtained over a long surface, thereby reducing the degrees of freedom of movement.

The rod can be provided with a protrusion or a number of protrusions. The protrusions can co-act with corresponding recesses in the mould part or an extension piece of the mould part. The protrusions can have different sizes. The recesses can have correspondingly different dimensions. Placing of the outer end with the protrusions in the corresponding recesses is hereby simple and clear, and can be carried out at high speed.

The mould part preferably forms a bottom of a cavity of the lower mould.

In addition, the invention relates to the combination of a number of assemblies, each placed in or close to a cavity of a lower mould of a thermoforming machine. The choice of material for these assemblies can be diverse.

A third aspect of the invention relates to an assembly of an exchangeable mould part and fixing device for fixing the mould part in a mould of a thermoforming machine, wherein the fixing device comprises an engaging element for engaging the mould part, wherein the assembly has a first position, in which the mould part is engaged and is fixable, and is preferably suitable for defining the shape of a product to be produced with the thermoforming machine, and a second position in which the mould part can be disengaged from the engaging element, and a fixing mechanism operative between the engaging element and the mould part for fixing the mould part relative to the engaging element. The assembly is adapted to disengage the mould part from the engaging element in the second position by a relative rotation movement between mould part and engaging element.

According to the third aspect, such an assembly is improved in order to improve the fixation. According to the third aspect of the invention, the rotation movement of the mould part can take place while the mould part is still situated in the cavity. The engaging elements only have to be displaced axially through a preferably small distance. This short distance is already present in the machine for the purpose of ejecting the product from the mould when the product is finished. Changeover of a mould to another product is therefore possible in simple and rapid manner. From the working position, the first position, the assembly or parts of the assembly move axially to a second position. This can for instance be in a direction into the cavity or out of the cavity. In this second position the engagement can be broken by a rotation movement. In one embodiment the complete assembly moves axially from the first position to the second position. In another embodiment there is a relative axial movement between engaging means and mould part. The embodiment according to this third aspect can be supplemented with the measures stated in this description according to the first or second aspect of the invention.

A fourth aspect of the invention relates to an assembly of an exchangeable form part and fixing device for fixing the form part in a lower mould of a thermoforming machine, wherein the fixing device comprises an engaging element for engaging the form part, wherein the assembly has a first position, in which the form part is suitable for defining the shape of a product to be produced with the thermoforming machine, and a second position in which the form part can be disengaged from the engaging element, and a fixing mechanism operative between the engaging element and the form part for fixing the form part relative to the engaging element.

In accordance with a fourth aspect, exchanging of the form part in the lower mould is improved. According to the fourth aspect of the invention, the assembly is adapted to disengage the form part from the engaging element in the second position by a relative rotation movement between form part and engaging element. This rotation movement of the mould part can take place while the mould part is still situated in the cavity. The engaging elements only have to be displaced axially through a preferably small distance. This short distance is already present in the machine for the purpose of ejecting a product out of the mould when the product is finished. Changeover of a mould to a different product is therefore possible in simple and rapid manner. The embodiment according to this fourth aspect can be supplemented with the measures stated in this description.

The invention will now be further elucidated on the basis of the accompanying drawings. In the drawings:
Figure 1 shows in perspective view a first embodiment of an assembly according to the invention;
Figure 2 shows a cross-section along II-II in figure 1;
Figure 3 shows a bottom view of the assembly of figure 1;
Figure 4 shows in perspective view a third embodiment of an assembly according to the invention;
Figure 5 shows a cross-section along V-V in figure 4;
Figure 6 is a perspective view of a third embodiment;
Figure 7 shows a cross-sectional view along the plane VII-VII in figure 6;
Figure 8 is a front view of a detail according to arrow VIII in figure 6;
Figure 9 is a front view of a detail according to arrow IX in figure 6.

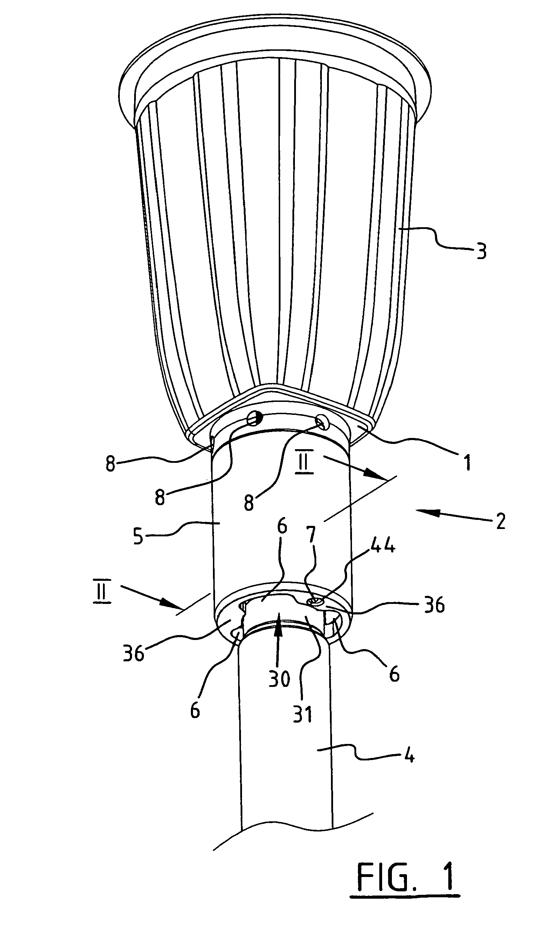

Figure 1 shows a first embodiment of an assembly of an exchangeable mould part 1 and fixing device 2 for fixing mould part 1 in a mould of a thermoforming machine (not shown). In this first example the mould part 1 is the bottom of a cup to be produced. The wall of the cup is formed by mould part 3. Situated herein is the cavity in which a product can be manufactured by thermoforming.

The fixing device comprises an engaging element 4 in the form of a rod extending transversely of a main plane of the lower mould and a fixing mechanism operative between engaging element 4 and mould part 1 for fixing mould part 1 relative to engaging element 4. Engaging element 4 is connected (not shown) to the thermoforming machine.

Attached to mould part 1 is an extension piece 5 which is provided with an opening 30 for passage of an end portion 31 of engaging element 4. The end portion is rod-shaped. The opening is elongate and can receive and partially guide the rod shape.

Opening 30 is arranged in the bottom of extension piece 5. Recesses 6 are also arranged adjacently in the bottom. This embodiment has three recesses, although there may be more or fewer recesses. In this embodiment the recesses have a corresponding size. The sizes can also differ.

Reference numeral 7 indicates a locking mechanism for locking rotation of mould part 1 relative to engaging element 4.

In an embodiment the locking mechanism is a screw which is arranged in a screw thread in the bottom of extension piece 5 and can then be tightened. The screw herein protrudes into opening 30 in the bottom of extension piece 5. Rotation of the outer end of engaging means 4 placed in opening 30 is herein blocked. This will be further elucidated hereinbelow.

Further provided in the mould part are openings 8 in which a tool can be placed for the purpose of connecting mould part 1 to extension piece 5. Extension piece 5 can be connected to different mould parts 1. The mould part can be connected to different extension pieces.

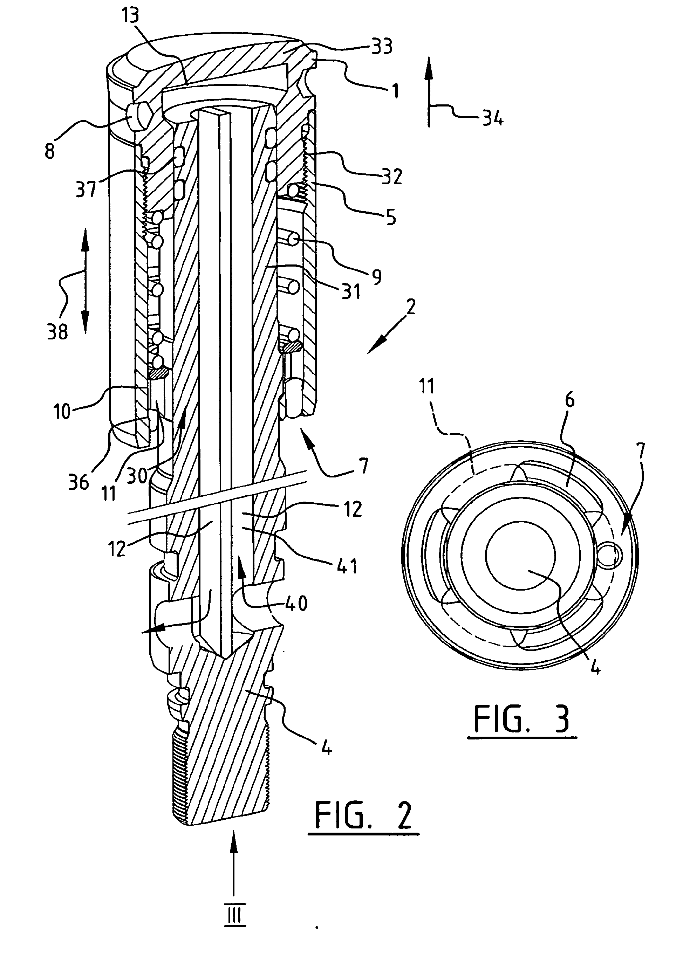

The assembly in cross-section in figure 2 shows the internal parts of fixing device 2. Mould part 1 is connected by means of threaded connection 32 to extension piece 5. Of mould part 1, which is here a mould part of the lower mould, only a bottom part 33 is shown. This bottom part can form part of the wall of the cavity in which the product is manufactured by thermoforming. In an embodiment bottom part 33 is movable as according to arrow 34. Owing to this movement a product that is formed in the cavity can be ejected from the cavity. Arrow 34 is oriented transversely of the main plane of the lower mould.

Accommodated in extension piece 5 is a compression spring 9 which on one side supports against the underside of mould part 1 and on the other side against retaining ring 10. An end portion 31 of engaging element 4 is accommodated in cavity 30 of mould part 1 and extension piece 5. Engaging element 4 is provided on its periphery with three protrusions 11 (see figure 3) which can co-act with recesses 6 of extension piece 5. The number of protrusions and recesses can also amount to more or fewer than three.

A second embodiment of the locking mechanism 7 is also shown in figures 2 and 3. This consists of a locking element which engages in a recess in engaging element 4 as well as in a recess of extension piece 5. Rotation of elements 4,5 relative to each other is hereby prevented.

The engaging element is further provided with channels 12 for feed and discharge of a cooling medium to and from mould part 1. Channels 12 debouch in a cooling space 13 of which mould part 1 forms a wall.

Chamber 13 has a variable volume. The volume of chamber 13 can be varied in that the outer end 31 can move as according to arrow 38 relative to extension piece 5. O-rings seal chamber 13.

In the position shown in figure 2 mould part 1 is fixed relative to engaging element 4. Chamber 13 can be filled by filling 40 channel 41. A determined overpressure can be adjusted via the discharge. The supplied liquid medium prevents volume changes in the chamber and in this way blocks the relative movement of engaging means 4 relative to extension piece 5 and mould part 1. Blocking of the relative movement in this manner forms part of the fixing mechanism for fixing the assembly according to the invention in the first position.

In the shown embodiment the fixing mechanism for fixing the relative movement of engaging means 4 and extension piece 5 and mould part 1 is formed on the one hand by the combination of resilient element 9 and the medium in chamber 13 and on the other by the contact of protrusions 11 on the inwardly protruding flanges 36 situated on the periphery of opening 30 between recesses 6. Flanges 36 prevent a movement of the engaging means beyond a determined point in the direction opposite to arrow 34. The engaging means is enclosed.

In another embodiment the end portion 31 of engaging means 4 lies against a protrusion in cavity 30. The protrusion prevents a further movement of end portion 31 in cavity 30. In yet another embodiment no use is made at all of the medium and the space 13 as additional component of the fixing mechanism.

From the position shown in figure 2 the mould part 1 cannot be rotated relative to engaging element 4, nor can it be displaced in longitudinal direction 38 of engaging element 4. In order to exchange mould part 1 the medium present in space 13 must first of all be discharged and locking 7 must then be released. This latter can take place by means of a random tool suitable for the purpose. Mould part 1 is subsequently rotated together with extension piece 5 through about 60° relative to engaging element 4 so that recesses 6 of the extension piece lie in line with protrusions 11 of engaging element 4. The rotation of the engaging element can take place by means of rotating the fixing device which is connected to the engaging means and which couples the whole to the thermoforming machine (not shown). As a consequence of the pressure force of spring 9 mould part 1 will then move upward together with extension piece 5 from engaging element 4 as according to arrow 34, and therefore be detached therefrom. In this embodiment the assembly herein moves as a whole from the first position, in which products can be formed in the cavity, to a second position wherein the engagement is still at least partially maintained but wherein the engagement can be broken.

The movement to the second position can take place while mould part 1 is still situated in the cavity of the lower mould. Mould part 1 only has to be moved a short distance upward from the bottom of the cavity as according to arrow 34 so that rotation of mould part 1 is possible.

Before the assembly is moved to the second position, in one embodiment a relative movement in longitudinal direction 38 is necessary between engaging means 4 and extension piece 5, for instance when locking mechanism 7 is a pin which is connected fixedly to a protrusion 11 of engaging means 4 and which must first be moved as according to arrow 34 out of the corresponding recess 44 in the bottom of extension piece 5.

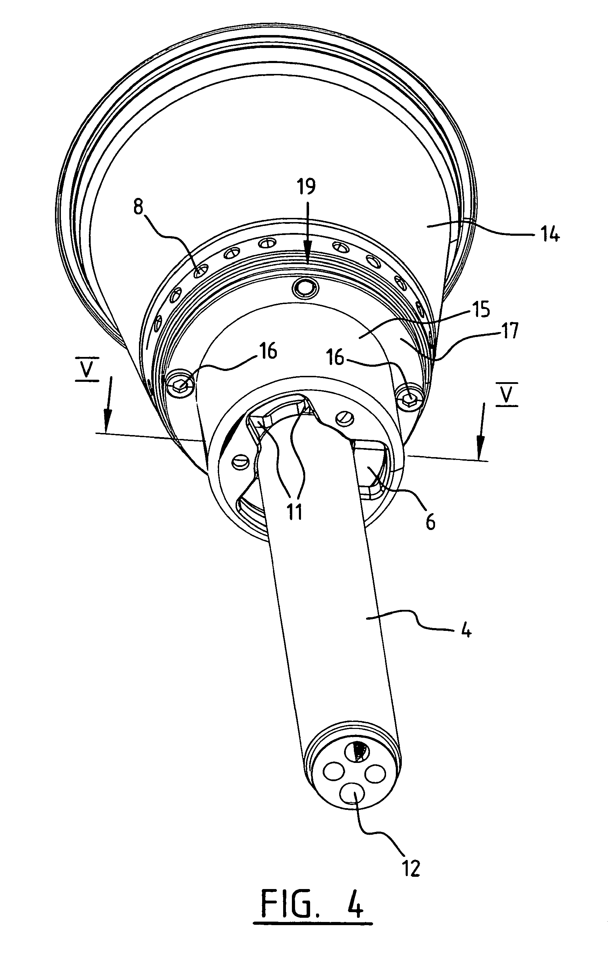

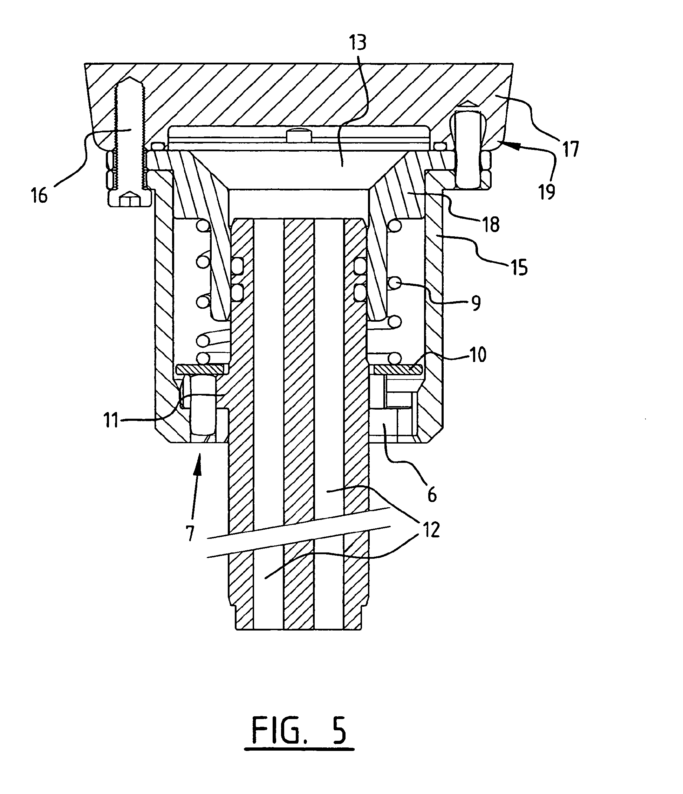

Figures 4 and 5 show a third exemplary embodiment of an assembly according to the invention. This embodiment relates to a tub provided with a first form part 17 which will form the bottom and a second form part 14 which will form the wall of the tub. In this case the form part is connected to extension piece 15 by means of socket bolts 16. Engaging element 4 has almost the same configuration. The same components are designated with the same reference numerals.

A difference from the embodiment shown in figures 1-3 is that here, because of the greater diameter of the forming bodies, an insert 18 is arranged between mould part 17 and extension piece 15. Spring 9 then engages on insert 18.

In addition, a second locking 19 is provided for locking rotation of extension piece 15 and insert 18 relative to form part 17. This serves for instance for positioning of an engraving relative to the form contour. In the exemplary embodiment according to figures 1 and 2 the engraving is arranged with locking mechanism 7 as reference.

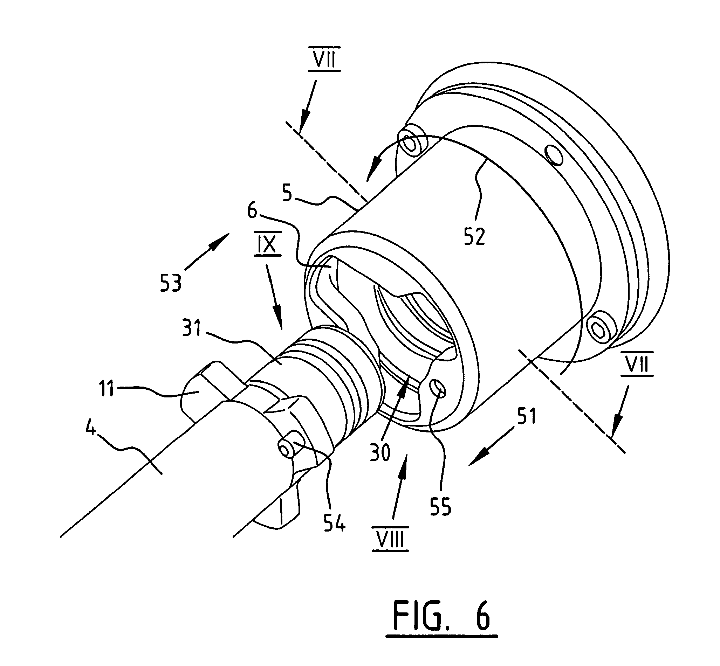

Figure 6 shows in three steps the release of the engaging element 4 from extension piece 5. From the position shown in figure 2 engaging element 4 is carried further into cavity 30. Arrows 51-53 indicate the relative movement of extension piece 5 relative to the engaging means 4 which is fixed in this embodiment. Arrow 51 indicates here that extension piece 5 moves further over the outer end 31 of the engaging means. This movement is the movement from the first position/mode to the second position/mode. During this movement, movement preferably takes place counter to the pressure exerted by a resilient element.

It will be apparent to the skilled person that the feed and discharge channels for the medium, preferably the cooling medium, can run through the different components of the assembly of the invention. The chamber can be arranged between mould part and engaging means, can be arranged in the mould part and can be arranged in the mould part and in the extension piece. It will also be apparent to the skilled person that, by making use of generally known valve means in the feed and discharge channels, optionally in co-action with a pumping means and/or a control device suitable for the purpose, an overpressure can be provided in the channels and particularly in the chamber which brings about a fixation of the mould part relative to the engaging means, and thus relative to the fixing device.

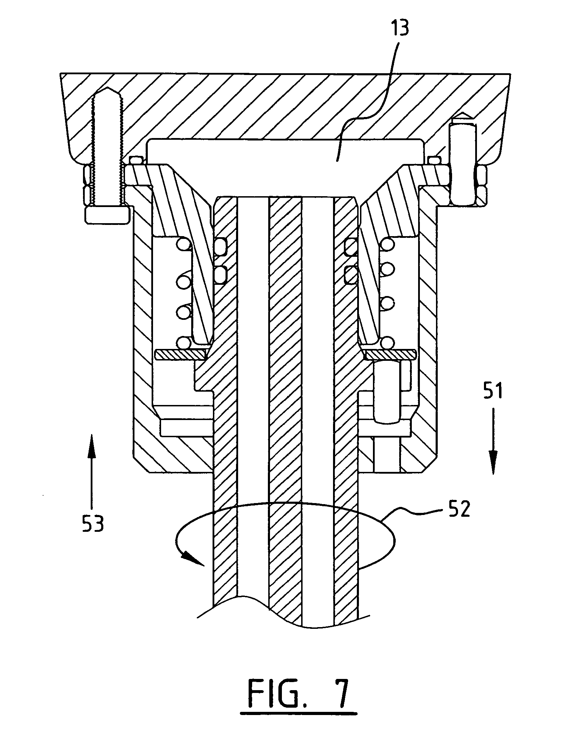

The second position is shown in figure 7. Here can also be seen that chamber 13 has acquired a smaller volume. A chamber filled with a medium would prevent the movement according to arrow 51, and a filled chamber is thus a possible component of a fixing mechanism for fixing in the first position.

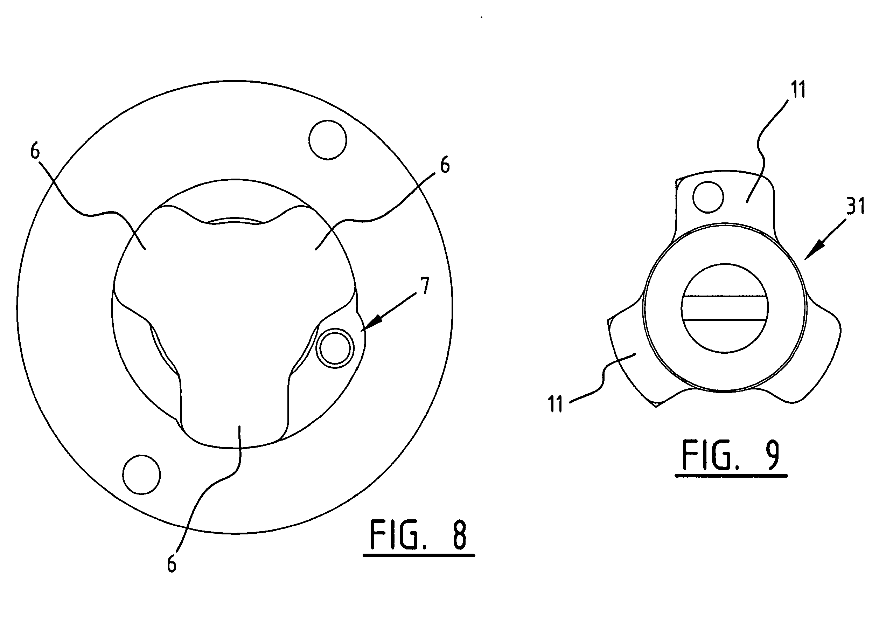

In the second position the locking of pin 54 in opening 55 which prevents rotation is broken and the extension piece and associated mould part can be rotated as according to arrow 52. Protrusions 11 are herein rotated such that they can move through recesses 6. The recesses and protrusions 11 have mutually adapted sizes. Figures 8 and 9 show front views of the bottom of the extension piece with respectively recesses 6 and protrusions 11 of engaging means 4. It can be seen that the recesses have different sizes in each case, wherein during replacement the extension piece can be placed in only one way onto the outer end of engaging means 4. This increases replacement speed.

From the second position as according to figures 7 the extension piece 5 can be rotated as according to arrow 52. In an embodiment a screw thread forms part of the rotating connection. More turns are then necessary to fully release the engagement.

After rotation the extension piece can be removed as according to arrow 53 from the end part of the engaging means, and replacement can take place in reverse sequence.

The invention is not limited to circular mould parts, any shape being possible in principle. In addition to any shape, the invention can also be applied to any desired size of mould part.

## Claims

1. Assembly of an exchangeable mould part (1) and fixing device (2) for fixing the mould part in a mould of a thermoforming machine, wherein the fixing device comprises:
- an engaging element (4) for engaging the mould part, wherein the assembly has a first position, in which the mould part is suitable for co-defining a form of a product to be produced with the thermoforming machine, and a second position in which the mould part can be disengaged from the engaging element, and
- a fixing mechanism operative between the engaging element and the mould part for fixing the mould part relative to the engaging element, wherein the assembly is adapted to disengage the mould part from the engaging element in the second position by a relative rotation movement between mould part and engaging element, wherein the fixing mechanism comprises a feed channel (41) and a chamber (13) for a medium, wherein the chamber is arranged between engaging element and mould part, **characterized in that,** the fixing mechanism comprises a bayonet-type fixing mechanism, and **in that** in said first position, said medium fixates said mould part relative to said engaging element.

2. Assembly as claimed in claim 1, wherein the feed channel is arranged in the engaging means.

3. Assembly as claimed in claim 1 or 2, wherein the fixing mechanism is adapted to fix the mould part relative to the engaging element in a direction transversely of a main plane of the mould.

4. Assembly as claimed in claim 1 or 2, wherein the mould part is movable between the first and second position relative to the engaging means.

5. Assembly as claimed in claim 4, wherein the relative movement is axial.

6. Assembly as claimed in claim 4 or 5, wherein a resilient element is arranged between the engaging means and the mould part for a resilient coupling during the relative movement.

7. Assembly as claimed in claim 6, wherein the resilient element biases the assembly to the first position.

8. Assembly as claimed in any of the foregoing claims, wherein in a fixed situation the chamber is filled with the medium.

9. Assembly as claimed in any of the foregoing claims, wherein a volume of the chamber can be changed by a relative movement of the mould part and the engaging means.

10. Assembly as claimed in claim 9, wherein the relative movement is the axial movement between the first and second position.

11. Assembly as claimed in any of the foregoing claims, further comprising a locking mechanism for locking rotation of the mould part relative to the engaging element.

12. Assembly as claimed in any of the foregoing claims, wherein there is attached to the mould part an extension piece which is provided with an opening for passage of an end portion of the engaging element.

13. Assembly as claimed in claim 12, wherein the extension piece is provided with at least one recess and the engaging element is provided with at least one protrusion co-acting with the recess.

14. Assembly as claimed in any of the foregoing claims, wherein the engaging element comprises channels for feed and discharge of a cooling medium to and from the mould part.

15. Assembly as claimed in claim 14, wherein the channels debouch in a cooling space of which the mould part forms a wall.

16. Assembly as claimed in any of the foregoing claims, wherein the engaging element comprises a rod extending transversely of the main plane of the mould.

17. Assembly as claimed in any of the foregoing claims, wherein the mould part forms a bottom of a cavity of the mould.

18. Use of an assembly as claimed in any of the foregoing claims in a thermoforming machine.

## Patentansprüche

1. Anordnung aus einem austauschbaren Formteil (1) und einer Fixiervorrichtung (2) zur Fixierung des Formteils in einer Form einer Thermoformvorrichtung, wobei die Fixiervorrichtung umfasst:
- ein Eingreifelement (4) zum Greifen des Formteils, wobei die Anordnung eine erste Position aufweist, in der das Formteil zur Mitbegrenzung einer Form eines mit der Thermoformvorrichtung herzustellenden Produktes geeignet ist, und eine zweite Position, in der das Formteil mit dem Eingreifelement außer Eingriff bringbar ist, und
- einen Fixiermechanismus, der zwischen dem Eingreifelement und dem Formteil wirkt, um das Formteil relativ zu dem Eingreifelement zu fixieren, wobei die Anordnung ausgelegt ist, in der zweiten Position mit einer relativen Drehbewegung zwischen Formteil und Eingreifelement das Formteil außer Eingriff mit dem Eingreifelement zu bringen, wobei der Fixiermechanismus einen Zuführkanal (41) und eine Kammer (13) für ein Medium umfasst, wobei die Kammer zwischen dem Eingreifelement und dem Formteil angeordnet ist,
**dadurch gekennzeichnet, dass**
der Fixiermechanismus einen bajonettartigen Fixiermechanismus umfasst, und **dadurch**, dass
in der ersten Position das Medium das Formteil relativ zu dein Eingreifelement fixiert.

2. Anordnung nach Anspruch 1, bei der der Zuführkanal in dem Eingreifmittel angeordnet ist.

3. Anordnung nach Anspruch 1 oder 2, bei der der Fixiermechanismus ausgelegt ist, um das Formteil relativ zu dem Eingreifelement in einer Richtung quer zu einer Hauptebene der Form zu fixieren.

4. Anordnung nach Anspruch 1 oder 2, bei der das Formteil zwischen der ersten und der zweiten Position relativ zu dem Eingreifmittel bewegbar ist.

5. Anordnung nach Anspruch 4, bei der die Relativbewegung axial ist.

6. Anordnung nach Anspruch 4 oder 5, bei der ein elastisches Element zwischen dem Eingreifmittel und dem Formteil für eine elastische Kopplung während der Relativbewegung angeordnet ist.

7. Anordnung nach Anspruch 6, bei der das elastische Element die Anordnung in die erste Position vorspannt.

8. Anordnung nach einem der vorstehenden Ansprüche, bei der in einer fixierten Situation die Kammer mit dem Medium gefüllt ist.

9. Anordnung nach einem der vorstehenden Ansprüche, bei der ein Volumen der Kammer mit einer Relativbewegung des Formteils und des Eingreifmittels veränderbar ist.

10. Anordnung nach Anspruch 9, bei der die Relativbewegung die Axialbewegung zwischen der ersten und der zweiten Position ist.

11. Anordnung nach einem der vorstehenden Ansprüche, ferner umfassend einen Sperrmechanismus zum Sperren einer Rotation des Formteils relativ zu dem Eingreifelement.

12. Anordnung nach einem der vorstehenden Ansprüche, bei der ein Verlängerungsstück an dem Formteil befestigt ist, das mit einer Öffnung für einen Durchlass eines Endbereichs des Eingreifelements versehen ist.

13. Anordnung nach Anspruch 12, bei der das Verlängerungsstück mit wenigstens einer Ausnehmung versehen ist und das Eingreifelement mit wenigstens einem Vorsprung versehen ist, der mit der Ausnehmung zusammenwirkt.

14. Anordnung nach einem der vorstehenden Ansprüche, bei der das Eingreifelement Kanäle zur Zufuhr und Ableitung eines Kühlmediums zu und von dem Formteil umfasst.

15. Anordnung nach Anspruch 14, bei der die Kanäle in einem Kühlraum münden, von dem das Formteil eine Wand bildet.

16. Anordnung nach einem der vorstehenden Ansprüche, bei der das Eingreifelement eine Stange umfasst, die sich quer zur Hauptebene der Form erstreckt.

17. Anordnung nach einem der vorstehenden Ansprüche, bei der das Formteil einen Boden einer Kavität der Form bildet.

18. Verwendung einer Anordnung nach einem der vorstehenden Ansprüche in einer Thermoformvorrichtung.

## Revendications

1. Assemblage constitué d'une partie de moule interchangeable (1) et d'un dispositif de fixation (2) pour fixer la partie de moule dans un moule d'une machine de thermoformage, dans lequel le dispositif de fixation comprend :
- un élément d'engagement (4) pour engager la partie de moule, dans lequel l'assemblage a une première position, dans laquelle la partie de moule convient pour co-définir une forme d'un produit à fabriquer avec la machine de thermoformage, et une seconde position, dans laquelle la partie de moule peut être dégagée de l'élément d'engagement, et
un mécanisme de fixation opérant entre l'élément d'engagement et la partie de moule pour fixer la partie de moule par rapport à l'élément d'engagement, dans lequel l'assemblage est adapté pour désengager la partie de moule de l'élément d'engagement dans la seconde position par un mouvement de rotation relatif entre la partie de moule et l'élément d'engagement, dans lequel le mécanisme de fixation comprend un canal d'alimentation (41) et une chambre (13) pour un milieu, dans lequel la chambre est agencée entre l'élément d'engagement et la partie de moule, **caractérisé en ce que** le mécanisme de fixation comprend un mécanisme de fixation du type à baïonnette et **en ce que**, dans ladite première position, ledit milieu fixe ladite partie de moule par rapport audit élément d'engagement.

2. Assemblage selon la revendication 1, dans lequel le canal d'alimentation est agencé dans le moyen d'engagement.

3. Assemblage selon la revendication 1 ou 2, dans lequel le mécanisme de fixation est adapté pour fixer la partie de moule par rapport à l'élément d'engagement dans une direction transversale à un plan principal du moule.

4. Assemblage selon la revendication 1 ou 2, dans lequel la partie de moule est déplaçable entre la première et la seconde position par rapport au moyen d'engagement.

5. Assemblage selon la revendication 4, dans lequel le mouvement relatif est axial.

6. Assemblage selon la revendication 4 ou 5, dans lequel un élément élastique est agencé entre le moyen d'engagement et la partie de moule pour un couplage élastique pendant le mouvement relatif.

7. Assemblage selon la revendication 6, dans lequel l'élément élastique biaise l'assemblage dans la première position.

8. Assemblage selon l'une quelconque des revendications précédentes, dans lequel, dans une situation fixe, la chambre est remplie du milieu.

9. Assemblage selon l'une quelconque des revendications précédentes, dans lequel un volume de la chambre peut être modifié par un mouvement relatif de la partie de moule et du moyen d'engagement.

10. Assemblage selon la revendication 9, dans lequel le mouvement relatif est le mouvement axial entre la première et la seconde position.

11. Assemblage selon l'une quelconque des revendications précédentes, comprenant en outre un mécanisme de verrouillage pour bloquer la rotation de la partie de moule par rapport à l'élément d'engagement.

12. Assemblage selon l'une quelconque des revendications précédentes, dans lequel on fixe à la partie de moule une pièce d'extension qui est pourvue d'une ouverture pour le passage d'une portion d'extrémité de l'élément d'engagement.

13. Assemblage selon la revendication 12, dans lequel la pièce d'extension est pourvue d'au moins un évidement et l'élément d'engagement est pourvu d'au moins une saillie coopérant avec l'évidement.

14. Assemblage selon l'une quelconque des revendications précédentes, dans lequel l'élément d'engagement comprend des canaux pour acheminer un milieu de refroidissement dans la partie de moule et l'en décharger.

15. Assemblage selon la revendication 14, dans lequel les canaux débouchent dans un espace de refroidissement dont la partie de moule forme une paroi.

16. Assemblage selon l'une quelconque des revendications précédentes, dans lequel l'élément d'engagement comprend une tige s'étendant transversalement au plan principal du moule.

17. Assemblage selon l'une quelconque des revendications précédentes, dans lequel la partie de moule forme un fond d'une cavité du moule.

18. Utilisation d'un assemblage selon l'une quelconque des revendications précédentes dans une machine de thermoformage.
